# EUROPEAN PATENT SPECIFICATION

(11) **EP 0 356 185 B1**
(45) Date of publication and mention of the grant of the patent: **03.11.1993**
(21) Application number: 89308461.6
(22) Date of filing: 21.08.1989
(51) Int. Cl.: F16K 3/24, F16K 11/07

(54) **Fluid control valve**
Fluidsteuerventil
Vanne de commande pour fluide

(30) Priority: 23.08.1988 GB 8820026
(43) Date of publication of application: 28.02.1990
(73) Proprietor: FERRANTI INTERNATIONAL plc, Manchester M22 5LA (GB)
(72) Inventor: Campbell, Colin Ian, Guildford Surrey GU4 7XN (GB)
(74) Representative: Bradley, David Nicholas

(56) References cited:
- EP-A- 0 198 234
- WO-A-85/03992
- DE-U- 8 626 721
- FR-A- 1 224 987

## Description

THIS INVENTION relates to a fluid control valve, and in particular, to such a valve having a spool mounted within a cylindrically shaped aperture in a body, at least one inlet port, and at least one outlet port, being provided within the valve, and annular seal being provided between a spool land and the body, the spool land and the body comprising two so-called members of the valve.

When the valve is closed, shutting off the fluid flow therethrough, it is required that there is at least one annular seal, in a compressed state, provided on either side of the exit mouth of the inlet port for the fluid, in respect of the longitudinal axis of the cylindrical aperture provided in the valve body for the spool. Such longitudinal axis of the aperture is considered as also comprising the longitudinal axis of the valve. In relation to said two members of the valve, comprising a spool land and the valve body, the exit mouth of the inlet port is formed in one such member, and the annular seals are provided in the other such member.

Further, if a relatively large fluid flow is required through the valve, when the valve is open, it is desired that the exit mouth of the inlet port, at the interface between the two members comprising the valve body and a spool land, should have a relatively large area. It is known for a port mouth of a relatively large area to comprise a plurality of constituent, discrete orifices, circumferentially distributed in a cylindrical area of the associated member, each such constituent orifice having a significant width along the longitudinal axis of the valve. Thus, when the valve is either opening, or closing, at least one of the annular seals is required to traverse such a relatively large area exit mouth of the inlet port, having such a significant width. Inevitably, the annular seal rapidly becomes worn, because of expansion of the seal, from the compressed state, into the wide exit mouth. Because the inlet port is provided in the spool, with the annular seals provided in the valve body, or vice versa, and because, usually, only one of these two members is displaceable, a reference in this specification, and the accompanying claims, to at least one of the annular seals traversing the exit mouth of the inlet port, refers to such traversing due to any form of relative movement between the spool and the valve body.

DE-U-8626721 discloses a fluid control valve of the type referred to above and according to the preamble of claim 1 in which the exit mouth of the inlet port is formed by a number of discrete circumferential orifices. In order to avoid the problem of seal wear each orifice has a diameter which is considerably smaller than the axial dimension of the seal. However, this construction limits the maximum possible flow of fluid through the valve.

In order to avoid this problem it is known to provide the exit mouth of the inlet port in the form of an annular groove. Such an arrangement is shown in EP-A-0198234. Whilst such an arrangement has a larger fluid flow capacity there is a serious risk of the seals becoming worn as they traverse the annular grooves, unless the grooves are narrow, again limiting the flow capacity of the valve.

Fluid control valves are required in many different situations requiring different flow capacities. It has been the practice to provide a different valve for each of a range of flow capacities. However, it would clearly be preferable if a single design of valve could be made which could readily be adjusted to cater for different flow capacities whilst still avoiding the risks of seal damage.

It is therefore an object of the invention to provide a fluid control valve which satisfies the requirements of being adjustable for differing fluid flow capacities whilst at the same time avoiding problems of seal wear or damage.

In accordance with the features of claim 1 this is achieved by constructing the valve so that the width of the exit mouth of the inlet port may be varied, whilst at the same time. If, when doing this, the width of the exit mouth is likely to approach too closely to the width of any seals which may traverse the exit mouth then the exit mouth may be made-up from a number of interconnected annular apertures.

When providing an exit mouth of the inlet port in the form of, for example, a single annular groove, the effective width of the groove, at the interface between the two members, comprising the valve body and a spool land, and along the longitudinal axis of the valve, can be chosen so that the exit mouth has the required relatively large area for a particular desired fluid flow rate therethrough. In relation to the known form of relatively large area port mouth, comprising a plurality of discrete, circumferentially distributed orifices, and having the same total effective area as a port mouth in the form of an annular groove, in accordance with the present invention, inevitably the width of the plurality of discrete orifices, along the longitudinal axis of the valve, is greater than that of the annular groove. There is a minimum tendency for each traversing annular seal to expand, from its compressed state, into the annular groove in accordance with the present invention, when having a minimum width along the longitudinal axis of the valve, and so the traversing seal does not tend to wear. Further, it is easier to shape the edges of an annular groove, in order to reduce wear of each traversing seal, than the edges of a plurality of discrete, circumferentially distributed orifices. Hence, such a port mouth in the form of an annular groove, with suitably shaped edges, causes less wear of a traversing annular seal than an equivalent port mouth comprising a plurality of discrete, circumferentially distributed orifices.

It is known to provide a pressure relieving annular groove, at the interface between two members comprising the valve body and a spool land, in a valve to operate at high pressures. The width of such a pressure relieving annular groove, along the longitudinal axis of the valve, usually is greater than the effective corresponding width of the exit mouth of an inlet port in the form of an annular groove, in accordance with the present invention. Seals usually are not provided in hydraulic valves to operate at high pressures; and usually seals are only provided in pneumatic valves to operate at high pressures if leakage passed the seals either is acceptable, or is not likely to occur, say, because the high pressure is present only transiently. Further, a seal normally is not provided if it is required to traverse a mouth so wide that it could expand from its compressed state and leave its seating, such as may occur if the seal is required to traverse a pressure relieving annular groove. Hence, an exit mouth of the inlet port in the form of an annular groove causes less wear of a traversing annular seal, compared to the wear which would be caused if the seal traversed a pressure relieving groove. However, normally the arrangement is such that an annular seal does not traverse a pressure relieving groove. A pressure relieving groove usually is provided only for the entrance mouth of a return port when this entrance mouth is capable of being closed by a spool land.

If the inlet port is provided in the valve body, there is required to be an entrance mouth for the inlet port at the body surface remote from the spool, the entrance mouth possibly comprising a single orifice, or, as is more usual for a relatively large fluid flow through the mouth, a plurality of constituent, discrete orifices, circumferentially distributed in a cylindrical area of the body surface remote from the spool. Individually between each constituent orifice of the entrance mouth, and the exit mouth of the inlet port, the exit mouth comprising, in accordance with the present invention, at least one annular groove provided at the interface between the valve body and a spool land, there is provided a generally radially extending passage.

If the inlet port is provided in said spool providing said spool land, the annular seals being provided in the valve body, the spool may have a composite construction, the exit mouth of the inlet port being provided between separable constituent parts of the composite spool.

If the inlet port is provided in said valve body, the annular seals being provided in the spool land, the valve body may have a composite construction, the exit mouth of the inlet port being provided between separable constituent parts of the composite valve body. In one such arrangement, the exit mouth of the inlet port is provided between separable constituent parts of the composite valve body, comprising a part of the greatest radial thickness, and a sleeve, the sleeve being a close fit within a reduced radial thickness part of the valve body integral with the greatest radial thickness part, the cylindrical surface of the aperture within the valve body for the spool being provided both by the greatest radial thickness part and by the sleeve. With such an arrangement, the valve may co-operate with means to vary the position of the sleeve within the reduced radial thickness valve body part, and along the longitudinal axis of the valve, so that the effective width, along the longitudinal axis of the valve, of a single annular groove providing the exit mouth of the inlet port, is capable of being adjusted continuously, and in an infinitely variable manner.

Irrespective of in which of said two members of the valve the exit mouth of the inlet port is provided, the exit mouth may have a plurality of constituent, discrete orifices, with each orifice in the form of an annular groove, such an exit mouth being provided by an annular chamber, within the associated member, and at least one generally planar, annular shaped, insert in the chamber. If a plurality of inserts are provided, each provided insert is spaced, along the longitudinal axis of the valve, from each adjacent insert, and, where appropriate, possibly also from the valve body; or if only one insert is provided, both major surfaces of the insert are spaced, along the longitudinal axis of the valve, from the valve body.

The present invention will now be described by way of example, with reference to the accompanying drawings, in which
Figure 1 is a sectional side elevation of part of one embodiment of a fluid control spool valve in accordance with the present invention, both the inlet, and return, ports being formed in a composite valve body, each spool land being provided with two spaced annular seals, and at the interface between the valve body and a spool land, there is provided an exit mouth for the inlet port in the form of an annular groove,
Figure 2 is of another embodiment of a valve in accordance with the present invention, and is of a valve in which spaced annular seals are provided in the valve body, the inlet port is formed in a composite spool, and the exit mouth of the inlet port is in the form of an annular groove,
Figure 3, corresponding to Figure 1, is of yet another embodiment of a valve in accordance with the present invention, the exit mouth for the inlet port of Figure 1, comprising a single annular groove, being replaced by one having a plurality of constituent orifices, with each orifice in the form of an annular groove, the plurality of orifices being provided by generally annular inserts in an annular chamber formed in the composite body,
Figure 4 is a plan view of an insert of Figure 3, and
Figure 5 is a sectional elevation of the insert, on the line 5-5 of Figure 4.

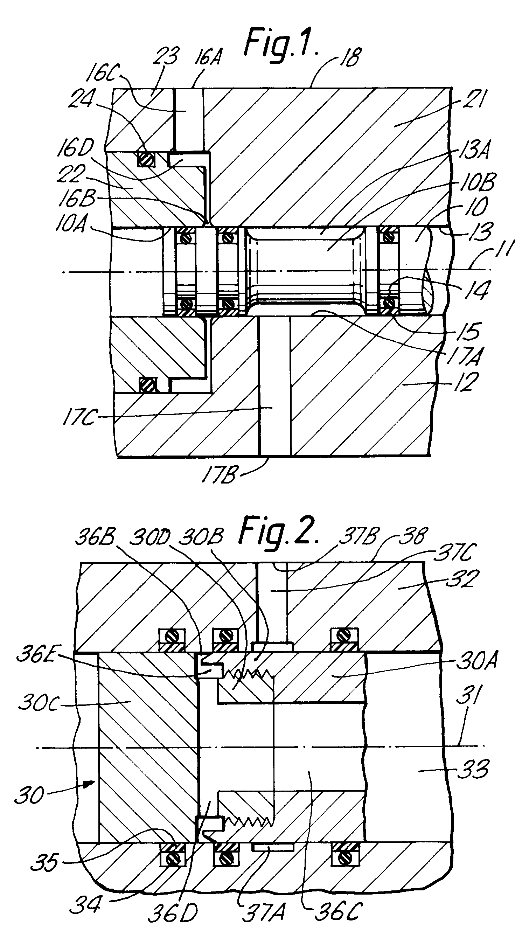

Figure 1 shows part of a fluid control spool valve, having a spool 10, displaceable along its longitudinal axis 11, and a co-operating, composite, hollow, cylindrical, valve body 12. The longitudinal axis 11 also comprises the longitudinal axis of the valve. The spool 10 is mounted within a cylindrical aperture 13 of the body 12, the aperture having a longitudinal axis coincident with the longitudinal axis 11 of the spool. The aperture 13 is closed at both ends, by means not shown. Annular seals, each comprising an O-ring seal 14, and a polytetrafluoroethylene cover 15, are provided at spaced locations along the longitudinal axis 11 of the spool, and within each of two spaced spool lands 10A. The O-ring seals 14 are normally in a compressed state. Inlet, and return, ports for the valve, respectively 16, and 17, are provided in the valve body 12.

At the cylindrical surface 18 of the valve body 12 remote from the spool 10 is provided an entrance mouth 16A for the inlet port, and at the interface between the valve body 12 and a spool land 10A, is provided an exit mouth 16B for the inlet port. An entrance mouth 17A for the return port is provided at the interface between the valve body 12 and the spool 10, whilst at the cylindrical surface 18 of the valve body 12 remote from the spool 10, there is provided an exit mouth 17B for the return port. Between the two spaced spool lands 10A is a reduced diameter portion 10B of the spool, and between the reduced diameter spool portion 10B and the valve body 12 is provided an annular chamber 13A, within the cylindrical aperture 13 of the body. When the valve is open the chamber 13A is in communication with both the exit mouth 16B of the inlet port, and the entrance mouth 17A of the return port, enabling fluid to flow through the valve, from the entrance mouth 16A of the inlet port to the exit mouth 17A of the return port. When the valve is closed, shutting off the fluid flow therethrough, the chamber 13A is in communication only with the entrance mouth 17A of the return port; and the exit mouth 16B of the inlet port is opposite a spool land 10A, and between the two spaced annular seals 14, 15 provided in the spool land.

For convenience, in this specification, and the accompanying claims, the spool land 10A co-operating with the inlet port 16, and the valve body 12, are referred to as two members of the valve.

Conveniently, the entrance mouth 16A of the inlet port, and the exit mouth 17B of the return port, both at the surface 18 of the valve body 12 remote from the spool 10; and the entrance mouth 17A of the return port, at the interface of the valve body 12 and the spool 10; each has a plurality of constituent orifices, circumferentially distributed in a cylindrical area, only one constituent orifice of each such mouth being shown in Figure 1. For the return port, generally radially extending passages 17C connect individually each of the plurality of orifices of the entrance mouth 17A to the plurality of orifices of the exit mouth 17B.

It is required that there is a relatively large fluid flow through the valve, when the valve is completely open. Consequently, inter alia, it is required that the exit mouth 16B of the inlet port has a relatively large area.

When the valve is either opening, or closing, the spool 10 is displaced, and one of the annular seals 14, 15 in the spool land 10A traverses the exit mouth 16B of the inlet port provided in the fixed valve body. Usually, the seal rapidly becomes worn when this mouth has a relatively large area, with a significant width along the longitudinal axis 11 of the valve, because of expansion of the seal, from the compressed state, into the mouth. This is particularly so if the port mouth, which is required to have a relatively large area, comprises a plurality of constituent, discrete, circumferentially distributed orifices, as described above in relation to the entrance mouth 16A of the inlet port, and both mouths 17A and 17B of the return port. Inevitably each such orifice has a significant width along the longitudinal axis of the valve.

However, in accordance with the present invention, and as shown in Figure 1, the tendency for the exit mouth 16B of the inlet port, at the interface between the valve body and the spool, to cause wear of a traversing annular seal 14, 15 is reduced, by the mouth being formed by an annular groove in the composite valve body 12. Thus, for a mouth of a desired area, a mouth in the form of an annular groove has the minimum width along the longitudinal axis 11 of the valve, and there is a minimum tendency for the seal to expand into the mouth.

For the inlet port, generally radially-extending passages 16C connect the plurality of orifices of the entrance mouth 16A with an annular plenum chamber 16D. The annular groove 16B, comprising the exit mouth of the inlet port, leads from the annular plenum chamber 16D. The valve body 12 is of a composite construction, and the annular exit mouth 16B, and the annular plenum chamber 16D, are provided between, of the constituent separable parts of the valve body, a part 21 of the valve body of greatest radial thickness, and a sleeve 22. The sleeve 22 is a close fit within a part 23 of the valve body of reduced radial thickness, the part 23 being integral with the greatest radial thickness part 21. The sleeve forms a portion of the cylindrical surface of the aperture 13 within the valve body for the spool 10, the remainder of this surface being provided by the greatest radial thickness body part 21. O-ring seals are provided between the sleeve 22 and the reduced radial thickness part 23 of the valve body 12, one such seal being indicated in Figure 1 by the reference numeral 24.

In addition, also in accordance with the present invention, and as shown in Figure 1, the edges of the annular groove 16B, at the interface between the valve body 12 and the spool land 10A, are suitably shaped, being rounded, or chamfered, or otherwise suitably shaped, to facilitate the traversing of each annular seal 14, 15 thereover, without significant wear of the traversing seal being caused. It is easier to shape the edges of the annular groove 16B, than the edges of a plurality of discrete, circumferentially distributed orifices.

By the provision of an exit mouth of the inlet port in the form of an annular groove 16B, in accordance with the present invention, a relatively large area mouth conveniently is provided at the interface between the valve body 12 and the spool land 10A. The effective width of the groove, at the interface, and along the longitudinal axis 11 of the valve, readily can be chosen so that the exit mouth 16B has a desired area, for a particular fluid flow rate therethrough. The chosen effective width of the annular groove readily can be obtained by appropriate machining of the valve body part 21, and/or of the sleeve 22. Alternatively, appropriately shaped shims can be provided within the annular groove 16B when the valve is being assembled, to adjust the width of the groove. A continuously, and infinitely variable, adjustable width of the annular groove can be provided by having means external of the valve, such as a screw arrangement, to vary the position of the sleeve 22 within the reduced radial thickness valve body part 23. The external means may be controlled in any convenient way.

Figure 2 shows part of another embodiment of a fluid control spool valve in accordance with the present invention.

A composite, cylindrical spool 30, displaceable along its longitudinal axis 31, is mounted in a hollow, cylindrical, valve body 32, within a cylindrical aperture 33. In effect, the whole of the spool 30 comprises a spool land. The aperture 33 has a longitudinal axis coincident with the longitudinal axis 31 of the spool 30. The longitudinal axis 31 also comprises the longitudinal axis of the valve. Annular seals, each comprising an O-ring seal 34, with a polytetrafluoroethylene cover 35, are provided at spaced locations along the longitudinal axis 31 of the valve, and within the valve body 32, at the interface between the valve body and the spool 30. The O-ring seals 34 are normally in a compressed state. An inlet port 36 for the valve, having an exit mouth 36B, is provided in the spool 30; and a return port 37 is provided in the valve body 32.

The return port 37 has an entrance mouth 37A, in the form of an annular groove in the valve body, at the interface between the valve body 32 and the spool 30. The exit mouth 37B of the return port comprises a plurality of circumferentially distributed orifices, at the surface 38 of the valve body remote from the spool. Generally radially extending passages 37C connect individually each of the plurality of circumferentially distributed orifices of the exit mouth 37B to the annular groove comprising the entrance mouth 37A. Only one combination of an exit mouth 37B, and connecting, radially-extending passage 37C, is shown in Figure 2. As is conventional, the annular groove comprising the entrance mouth 37A of the return port, is wider, along the longitudinal axis 31 of the valve, than the radially-extending passages 37C leading therefrom. The annular groove 37A has a relatively large size, and the arrangement is such that no seal 34, 35 is required to traverse the large groove 37A.

The entrance mouth of the inlet port 36 is not shown, but an illustrated first passage 36C therefrom extends along part of the longitudinal axis 31 of the spool. From the end of the first passage 36C remote from the entrance mouth, a plurality of radially-extending, circumferentially distributed, second passages 36D communicate with an annular plenum chamber 36E. An annular groove 36B, comprising the exit mouth of the inlet port, leads from the annular plenum chamber 36E, to the surface of the spool 30 at the interface with the valve body 32. Conveniently, the annular exit mouth 36B, and the annular plenum chamber 36E, are provided between two constituent parts of the composite spool 30 which are screwed together. Both such constituent parts of the spool are generally cylindrical in shape, and are a close fit in the cylindrically shaped aperture 33 in the valve body 32, each part having a longitudinal axis coincident with the longitudinal axis 31 of the aperture. One part 30A has a re-entrant end portion 30B, which is partially internally screw threaded. The other part 30C has a reduced-diameter, protruding end portion 30D, which is partially screw threaded, in a manner complementary to the screw thread on the part 30B. When screwed together the parts 30A and 30C comprise the required cylindrical spool, with the longitudinally extending first passage 36C traversing through the part 30A, and through the co-operating protruding end portion 30D of the part 30C. The plurality of radially-extending, circumferentially distributed, second passages 36D are provided at the base of the reduced-diameter, protruding end portion 30D of the part 30C; and the surface region of this base is unthreaded. In the composite spool, the outer extremity of the re-entrant end portion 30B of the part 30A, which is also unthreaded, is spaced from the base of the co-operating, reduced-diameter, protruding end portion 30D of the part 30C. The annular plenum chamber 36E is defined between these two spaced, unthreaded regions. The extremity of the re-entrant end portion 30B of the part 30A is also spaced from the non-reduced-diameter portion of the part 30C, and the annular groove 36B, comprising the exit mouth of the inlet port, is defined therebetween.

When the valve is open, the exit mouth 36B of the inlet port is directly in communication with the entrance mouth 37A of the return port, enabling fluid to flow through the valve. When the valve is closed, shutting off the fluid flow therethrough, the exit mouth 36B of the inlet port is between two spaced annular seals 34, 35 provided in the valve body 32, at the interface between the valve body and the spool 30. When the valve is either opening, or closing, the spool 30 is displaced, and the exit mouth 36B of the inlet port, provided in the spool, 30 traverses one of the annular seals 34, 35 provided in the fixed valve body. The seal expands into the exit mouth, and becomes worn. However, in accordance with the present invention, the tendency for the exit mouth 36B of the inlet port to cause wear of a traversing annular seal 34, 35 is reduced, by the mouth having a small width along the longitudinal axis 31 of the valve, being formed as an annular groove in the composite spool 30.

In addition, also in accordance with the present invention, and as shown in Figure 2, the edges of the annular groove 36B, comprising the exit mouth of the inlet port, at the interface between the valve body 32 and the spool 30, are suitably shaped, being rounded, or chamfered, or otherwise suitably shaped, to facilitate the traversing of each annular seal 34, 35 thereover, further reducing wear of the traversing seal.

In addition, it can be seen that the effective width of the annular exit mouth 36B, of the inlet port at the interface between the valve body 32 and the spool 30, is smaller than that of the pressure relieving annular groove 37A comprising the entrance mouth of the return port. Hence, the exit mouth 36B of the inlet port causes less wear of a traversing annular seal 34, 35, compared to the wear which would be caused if the seal traversed the pressure relieving groove 37A, provided when a return port is capable of being closed by a spool land. No annular seal 34, 35 traverses the pressure relieving groove 37A in the valve construction of Figure 2.

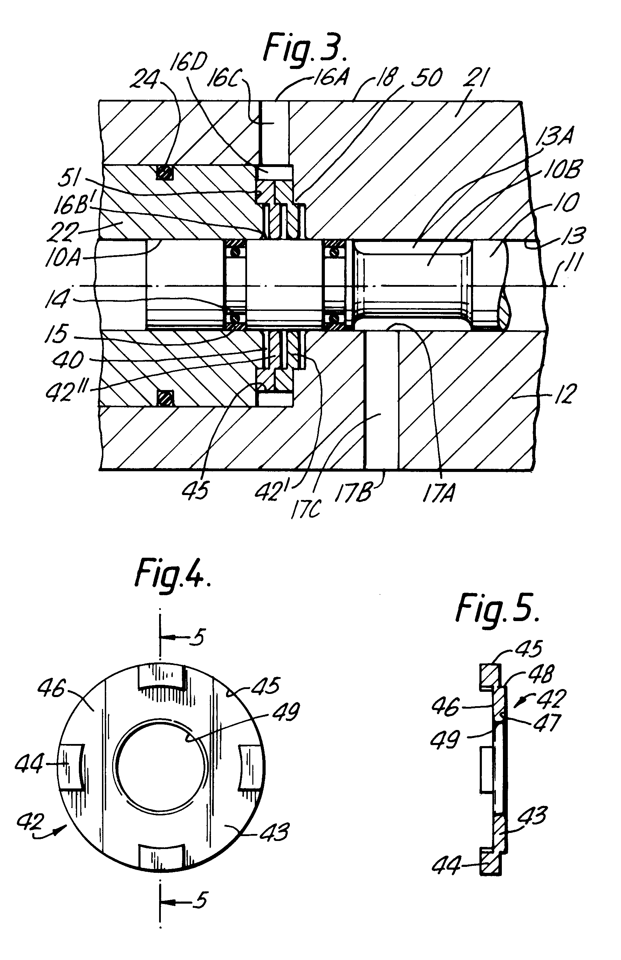

Figure 3 shows part of yet another embodiment of a fluid control spool valve in accordance with the present invention, the valve shown in Figure 3 comprising a modification of the valve shown in Figure 1. Parts of the valve shown in Figure 3 identical to, or closely resembling, parts of the valve shown in Figure 1 are identified by the same reference numerals in both Figures.

The valve shown in Figure 3 differs from that shown in Figure 1 in that the exit mouth 16B′ of the inlet port is provided by an annular chamber 40 communicating with the annular plenum chamber 16D, with a plurality of discrete, constituent orifices formed within the chamber 40, with each such orifice comprising an annular groove. The chamber 40, conveniently, provides the desired plurality of discrete constituent orifices by the provision therein of generally annular, substantially planar, inserts 42, one such insert being shown in greater detail in Figures 4 and 5.

Thus, each generally annular insert 42 comprises an annular plane part 43, and four, spaced, circumferentially distributed lugs 44, extending at right angles to the plane of the part 43, at the radially outer periphery 45 of the insert, and from only one major surface 46 of the part 43. The other major surface 47 of the part 43 is provided with an annular recess extending beneath each lug 44, as indicated at 48, so as to be capable of accommodating the corresponding lug 44 of an adjacent insert 42 in the chamber 40.

In assembling the valve shown in Figure 3, in relation to each adjacent pair of co-operating inserts 42 in the chamber 40, the lugs 44 of one insert fit into the annular recess 48 of the other insert. In particular, the lugs 44 hold the major surface 46 of said one insert 42, on which they are formed, spaced from the opposing major surface 47 of said other insert. Thereby there is provided a fluid passage between each adjacent pair of the lugs, from the radially outer peripheries 45 of the co-operating pair of inserts to the radially inner peripheries 49 of the co-operating pair of inserts. The common portion of these passages, between the insert major surfaces 46 and 47, provides a constituent annular orifice of the exit mouth 16B′, at the radially inner peripheries 49 of the inserts.

The plurality of inserts, fitted together in this manner, and comprising co-operating pairs of inserts, with each pair having an orifice provided therebetween, is positioned within the valve body part 21, before the sleeve 22 is fitted in the valve body.

Within the chamber 40, the insert 42′ at one end of the plurality of inserts, has its recess 48, otherwise exposed, fitting complementary projections 50 formed on the valve body part 21, as shown in Figure 3. Between this end insert 42′ and the valve body 12 is provided one of the plurality of orifices of the exit mouth 16B′ of the inlet port. The insert 42'' at the other end of the plurality of inserts has its lugs 44 fitting complementary recesses 51 formed in the sleeve 22, when the sleeve is positioned within the valve body, as shown in Figure 3. Between this insert 42'' and the sleeve 22 is provided another of the plurality of orifices of the exit mouth 16B′ of the inlet port.

The radially inner peripheries 49 of each insert 42, and the co-operating edges of the valve body part 21 and the sleeve 22, are suitably shaped to facilitate the traversing of each annular seal 14, 15 thereover.

Hence, a relatively large area exit mouth 16B′ conveniently is provided at the interface between the valve body and the spool land 10A. The total effective width of the plurality of annular grooves, at the interface, readily can be chosen so that the exit mouth 16B′ has a desired area, for a particular fluid flow rate therethrough. By the provision of a plurality of annular grooves, spaced from each other along the longitudinal axis of the valve, the width of each constituent groove of the exit mouth 16B′ is less than if a single annular groove had been provided, of the same effective area as the total area of the exit mouth 16B′. Thus, there is a reduced tendency for the exit mouth 16B′, comprising a plurality of annular grooves, to cause wear of an annular seal 14, 15 traversing the mouth, compared with an equivalent single groove comprising the mouth.

The valve construction of Figure 3 is also advantageous in that a reduced fluid flow rate readily may be obtained, by only some of the plurality of discrete annular orifices of the exit mouth 16B′ of the inlet port being arranged to be in communication with the return port 17, by an appropriate displacement of the spool 10 relative to the valve body 12.

If only two, such, constituent orifices are provided for the exit mouth 16B′ of the inlet port, only one insert 42 may be provided, spaced from both the valve body part 21, and the sleeve 22.

If more than one insert 42 is provided, they are required to be spaced from each other, but, possibly, they are not required to be spaced from the valve body part 21, and/or the sleeve 22.

The valve construction of Figure 2 can be modified to have an exit mouth of the inlet port comprising a plurality of constituent, discrete orifices, each in the form of an annular groove, substantially in the same manner as such an exit mouth is provided in the valve construction of Figure 3.

Alternatively, an exit mouth of the inlet port comprising a plurality of constituent, discrete orifices, each in the form of an annular groove, may be provided in any other convenient manner.

It is not essential that the exit mouth of the inlet port leads from an annular plenum chamber, and the annular plenum chamber may be omitted.

## Claims

1. A fluid control valve comprising two members namely a body (12, 38) formed with a cylindrical aperture (13, 33) and a spool (10, 30) relatively displaceable in the aperture (13, 33) along the longitudinal axis (11, 31) thereof, a plurality of annular seals (14, 15; 34, 35) at the interface between said two members and carried by at least one of the two members so as to bear under compression upon the other of the two members, an inlet port (16, 36) arranged to communicate with an external fluid circuit and an exit port (17, 37) arranged to communicate with said circuit, the inlet port (16, 36) being provided in the other of the two members and comprising an inlet mouth (16A) arranged to communicate with said circuit and an exit mouth (16B, 36B) characterised in that the member (12, 30) of the valve containing the inlet port (16, 36) is of composite construction with the exit mouth (16B, 36B) of the inlet port (16, 36) formed between separate constituent parts (21, 22; 30A, 30C) of the member (12, 30) such that the width of the exit mouth (16B, 36B) of the inlet port (16, 36) along the longitudinal axis (11, 31) may be varied in order to vary the possible flow of fluid through the valve, the exit mouth (16B, 36B) being in the form of at least one annular groove the width of which at said interface is substantially narrower than the width at the interface of any seal which traverses the exit mouth as the valve is moved from its closed position to an open position.

2. A valve as claimed in Claim 1 in which the annular seals (14, 15) are provided in one or more lands (10A) formed on the spool, the inlet port (16) and exit port (17) being formed in the valve body (12) characterised in that the two constituent parts of the valve body comprise a first part (21) of greater radial thickness and a sleeve (22) formed to be a close fit within a portion of the first part (21), the surface of the cylindrical aperture (13) being formed jointly by the inner surface of the first part (21) and the inner surface of the sleeve (22) with the exit mouth (16B) of the exit port (16) formed by an annular groove formed between the first part (21) and the sleeve (22).

3. A valve as claimed in Claim 1 in which the annular seals (34, 35) are provided in the body (32) of the valve, the inlet port (36) being formed in the spool (30) and the exit port (37) being formed in the body (32) characterised in that the constituent parts of the spool (30) comprise a first part (30A) and a second part (30C) which may be secured together to provide an exit mouth (36B) of the inlet port in the form of an annular groove formed between the first part (30A) and the second part (30C).

4. A valve as claimed in any one of Claims 1 to 3 characterised in that the exit mouth of the inlet port comprises an annular chamber into which may be inserted at least one annular-shaped insert (42) such that the exit mouth of the inlet port has a plurality of constituent discrete orifices each in the form of an annular groove.

5. A valve as claimed in Claim 4 characterised in that each insert (42) comprises a disc-shaped member (43) having a central aperture and a plurality of lugs (44) projecting from one major surface only of the member (43).

6. A valve as claimed in either of Claims 4 or 5 characterised in that a plenum chamber (16D, 36E) is formed between the inlet mouth (16A) of the inlet port (16, 36) and the exit mouth (16B, 36B) thereof.

## Patentansprüche

1. Fluidsteuerventil, welches zwei Teile, nämlich einen Körper (12, 32), welcher mit einer zylindrischen Öffnung (13, 33) versehen ist, und einen Steuerschieber (10, 30) aufweist, welcher in der Öffnung (13, 33) entlang der Längsachse (11, 31) desselben relativ verschiebbar ist, ferner eine Mehrzahl von Ringdichtungen (14, 15; 34, 35) an der Grenzfläche zwischen den beiden Teilen aufweist, welche von wenigstens einem der beiden Teile derart getragen werden, daß diese durch das andere der beiden Teile zusammengedrückt werden, eine Einlaßöffnung (16, 36), welche derart angeordnet ist, daß sie mit einer externen Fluidschaltung in kommunizierender Verbindung steht, und eine Auslaßöffnung (17, 37) aufweist, welche derart ausgelegt ist, daß sie mit der Schaltung in kommunizierender Verbindung steht, wobei die Einlaßöffnung (16, 36) in dem anderen der beiden Teile vorgesehen ist und eine Einlaßöffnung (16A) aufweist, welche derart angeordnet ist, daß sie in kommunizierender Verbindung mit der Schaltung und einer Austrittsöffnung (16B, 36B) steht, **dadurch gekennzeichnet,** daß das die Einlaßöffnung (16, 36) enthaltende Teil (12, 30) des Ventils eine Verbundkonstruktion hat, wobei die Austrittsöffnung (16B, 36B) der Einlaßöffnung (16, 36) zwischen gesonderten Bauteilen (21, 22; 30A, 30C) des Teils (12, 30) derart gebildet wird, daß die Breite der Austrittsöffnung (16B, 36B) der Einlaßöffnung (16, 36) entlang der Längsachse (11, 31) verändert werden kann, um den möglichen durch das Ventil gehende Fluidstrom zu verändern und daß die Austrittsöffnung (16B, 36B) in Form wenigstens einer ringförmigen Ausnehmung ausgelegt ist, deren Breite an der Grenzfläche im wesentlichen schmaler als die Breite an der Grenzfläche einer der Dichtungen ist, an welcher die Austrittsöffnung vorbeigeht, wenn das Ventil von seiner Schließstellung zu einer Offenstellung bewegt wird.

2. Ventil nach Anspruch 1, bei dem die Ringdichtungen (14, 15) in einem oder mehreren hervorspringenden Teilen (10A) vorgesehen sind, welche auf dem Steuerschieber ausgebildet sind, und bei dem die Einlaßöffnung (16) und die Auslaßöffnung (17) in dem Ventilkörper (12) ausgebildet sind, **dadurch gekennzeichnet,** daß die beiden Bauteile des Ventilkörpers ein erstes Teil (21) mit größerer radialer Dicke und eine Hülse (22) aufweisen, welche derart ausgebildet ist, daß sie eng sitzend in einem Teil des ersten Teils (21) angeordnet ist, daß die Oberfläche der zylindrischen Öffnung (31) im Zusammenwirken mit der inneren Fläche des ersten Teils (21) und der inneren Fläche der Hülse (22) gebildet wird, und daß die Austrittsöffnung (16B) des Auslasses (16) von einer ringförmigen Ausnehmung gebildet wird, welche zwischen dem ersten Teil (21) und der Hülse (22) gebildet wird.

3. Ventil nach Anspruch 1, bei dem die Ringdichtungen (34, 35) im Körper (32) des Ventils vorgesehen sind, die Einlaßöffnung (36) in dem Steuerschieber (30) ausgebildet ist und die Auslaßöffnung (37) im Körper (32) ausgebildet ist, **dadurch gekennzeichnet,** daß die Bauteile des Steuerschiebers (30) ein erstes Teil (30A) und ein zweites Teil (30C) aufweisen, welche fest miteinander verbunden werden können, um eine Austrittsöffnung (36B) der Einlaßöffnung in Form einer ringförmigen Ausnehmung zu bilden, welche zwischen dem ersten Teil (30A) und dem zweiten Teil (30C) gebildet wird.

4. Ventil nach einem der Ansprüche 1 bis 3, **dadurch gekennzeichnet,** daß die Austrittsöffnung der Einlaßöffnung eine ringförmige Kammer aufweist, in welche wenigstens ein ringförmiger Einsatz (42) derart einsetzbar ist, daß die Austrittsöffnung der Einlaßöffnung eine Mehrzahl von gesonderten hierbei gebildeten Öffnungen hat, welche jeweils in Form einer ringförmigen Ausnehmung ausgelegt sind.

5. Ventil nach Anspruch 4, **dadurch gekennzeichnet,** daß jeder Einsatz (42) ein scheibenförmiges Teil (43) aufweist, welches eine Mittelöffnung und eine Mehrzahl von Ansätzen (44) hat, die von einer Hauptfläche lediglich des Teils (43) vorstehen.

6. Ventil nach Anspruch 4 oder 5, **dadurch gekennzeichnet,** daß eine Plenumkammer (16D, 36E) zwischen der Einlaßöffnung (16A) des Einlasses (16, 36) und der Auslaßöffnung (16B, 36B) hiervon gebildet wird.

## Revendications

1. Une vanne de commande pour fluide comprenant deux éléments, à savoir un corps (12, 32) formé avec une ouverture cylindrique (13, 33), et un piston-valve (10, 30) capable de se déplacer relativement dans l'ouverture (13, 33) suivant l'axe longitudinal (11, 31), plusieurs joints annulaires (14, 15 ; 34, 35) à la jonction entre lesdits deux éléments et supportés par au moins un de ces deux éléments afin de prendre appui par compression sur l'autre élément, un orifice d'entrée (16,36) permettant la communication avec un circuit fluidique externe et un orifice de sortie (17, 37) permettant la communication avec ledit circuit, l'orifice d'entrée (16,36) étant implanté dans le second des deux éléments et comprenant une bouche d'entrée (16A) disposée pour communiquer avec ledit circuit et une bouche de sortie (16B, 36B) caractérisée en ce que l'élément (12,30) de la vanne contenant l'orifice d'entrée (16, 36) est en construction composite avec la bouche de sortie (16B, 36B) de l'orifice d'entrée (16, 36) formée entre les parties constitutives séparées (21, 22, 30A, 30C) de l'élément (12, 30), de telle sorte que la largeur de la bouche de sortie (16B, 36B) de l'orifice d'entrée (16, 36) le long de l'axe longitudinal (11, 31) puisse être modifiée afin de varier le débit possible du fluide à travers la vanne, la bouche de sortie (16B, 36B) ayant la forme d'au moins une rainure annulaire dont la largeur, à ladite jonction, est nettement plus étroite que la largeur à la jonction d'un joint quelconque qui traverse la bouche de sortie lorsque la vanne passe de la position fermée à une position ouverte.

2. Une vanne, selon la revendication 1, dans laquelle les joints annulaires (14, 15) sont placés dans un ou plusieurs listels (10A) formés sur le piston-valve, 1'orifice d'entrée (16) et l'orifice de sortie (17) étant formés dans le corps (12) de la vanne caractérisée en ce que les deux parties constitutives du corps de vanne comprennent une première partie (21) d'épaisseur radiale plus grande et un manchon (22) formé de manière à assurer un ajustement fin dans une portion de la première partie (21), la surface de l' ouverture cylindrique (13) étant conjointement formée par la surface interne de la première partie (21) et la surface interne du manchon (22) avec la bouche de sortie (16B) de l'orifice de sortie (16) formée par une rainure annulaire pratiquée entre la première partie (21) et le manchon (22).

3. Une vanne selon la revendication 1, dans laquelle es joints annulaires (34, 35) sont placés dans le corps (32) de la vanne, l'orifice d'entrée (36) étant formé dans le piston-valve (30) et l'orifice de sortie (37) étant formé dans le corps (32), caractérisée en ce que les parties constitutives du piston-valve (30) comprennent une première partie (30A) et une deuxième partie (30C) pouvant être fixées entre elles afin de réaliser une bouche de sortie (36B) de l'orifice d'entrée en forme de rainure annulaire formée entre la première partie (30A) et la deuxième partie (30C).

4. Une vanne selon l'une des revendications 1 à 3, caractérisée en ce que la bouche de sortie de l'orifice d'entrée comprend une chambre annulaire dans laquelle au moins un insert (42) de forme annulaire peut être insérée de sorte que la bouche de sortie de l'orifice d'entrée présente plusieurs orifices discrets, ayant chacun la forme d'une rainure annulaire.

5. Une vanne selon la revendication 4, caractérisée en ce que chaque insert (42) se compose d'un élément en forme de disque (43) pourvu d'une ouverture centrale et de plusieurs bossages (44) faisant saillie d'une seule surface principale de l'élément (43).

6. Une vanne selon la revendication 4 ou 5, caractérisée en ce qu'un collecteur (16D, 36E) est formée entre la bouche d'entrée (16A) de l'orifice d'entrée (16, 36) et la bouche de sortie (16B, 36B) de celui-ci.
